(19) **Europäisches Patentamt European Patent Office Office européen des brevets**

(11) **EP 1 482 632 B1**

(12) **EUROPEAN PATENT SPECIFICATION**

(45) Date of publication and mention of the grant of the patent:
**27.08.2014 Bulletin 2014/35**

(51) Int Cl.:
*H02P 6/10* *(2006.01)*    *H02P 6/18* *(2006.01)*

(21) Application number: **04012314.3**

(22) Date of filing: **25.05.2004**

(54) **Controller of DC brushless motor**

Steuerung eines bürstenlosen Gleichstrommotors

Contrôleur d'un moteur sans balais à courant continu

(84) Designated Contracting States:
**ES GR IT**

(30) Priority: **26.05.2003 JP 2003147791**

(43) Date of publication of application:
**01.12.2004 Bulletin 2004/49**

(73) Proprietor: **Panasonic Corporation Kadoma-shi Osaka 571-8501 (JP)**

(72) Inventors:
• **Hasegawa, Hiroki Kusatsu-shi Shiga-ken (JP)**
• **Higashi, Mitsuhide Kusatsu-shi Shiga-ken (JP)**
• **Tani, Yuuji Otsu-shi Shiga-ken (JP)**

(74) Representative: **Eisenführ Speiser Patentanwälte Rechtsanwälte PartGmbB Postfach 10 60 78 28060 Bremen (DE)**

(56) References cited:
JP-A- 9 047 026    JP-A- 9 191 685
JP-A- 2000 083 396    JP-A- 2000 184 786
JP-A- 2001 186 787    JP-A- 2002 101 684
US-A1- 2003 052 642

**Description**

BACKGROUND OF THE INVENTION

Field of the Invention

The present invention relates to a controller of a DC brushless motor.

Description of the Background Art

Conventionally, as a method of providing an inverter control system in which a blank region does not exist in an operation region of an electric motor such as a sensor less DC brushless motor, and a stable operation is performed over a whole region of the number of revolutions, in an inverter control system comprising an electric motor including a rotator having a plurality of magnetic poles, an inverter which applies an inverter output voltage depending on a driving signal, to the electric motor in order to drive the electric motor, a magnetic polar position detection circuit which detects a position of the magnetic pole of the electric motor, and an inverter controller which generates a driving signal depending on the position of the magnetic pole and a predetermined carrier frequency and transmits it to the inverter, there are considered an inverter controller which varies the predetermined carrier frequency to another carrier frequency and generates the driving signal when the predetermined carrier frequency becomes an integral multiple of a frequency of the inverter output voltage, or an inverter controller which varies the predetermined carrier frequency to another carrier frequency which is set so as to correspond to a predetermined ratio and generates the driving signal when the number of revolutions of the electric motor calculated based on the position of the magnetic pole and the predetermined carrier frequency become the predetermined ratio. Furthermore, according to a control method which has also been designed, when a state in which a predetermined carrier frequency coincides with an integral multiple of a frequency of an inverter output voltage is moved to a state in which the predetermined carrier frequency does not coincide with the integral multiple of the frequency of the inverter output voltage, the predetermined carrier frequency is varied to another carrier frequency set depending on the state and then a driving signal is generated (refer to patent document 1: Japanese Unexamined Patent Publication NO. 2002-101684 ([0015] to [0024] and Fig. 1, for example).

In addition, as a method of selecting an appropriate carrier frequency in order to prevent an oscillation or noise, there has been designed a control method of previously finding characteristics of a carrier frequency optimal to the number of revolutions on an experimental bases and having them in a carrier frequency switching circuit as database. According to a view showing an example of a control pattern of the carrier frequency, the carrier frequency is set large in a region of comparatively low number of revolutions and the carrier frequency is set small in a region of the number of revolutions other than the above. In addition, according to another example of a control pattern of the carrier frequency, there is an example in which the carrier frequency in the region of the low number of revolutions is set large and kept constant, and the carrier frequency is linearly reduced toward a high-speed revolution region other than that, or an example in which the carrier frequency is set large in the region of the low number of revolutions and the carrier frequency is decreased as the number of revolutions is increased step by step. Their control patterns have been designed as a method of preventing resonance which is generated when the number of revolutions coincides with the carrier frequency (referring to patent document 2: Japanese Unexamined Patent Publication NO. 2002-186787 ([0052] to [0054] and Fig. 1, for example).

According to Japanese Unexamined Patent Publication NO. 2002-101684, when a carrier frequency becomes a predetermined ratio to the number of revolutions of the motor or a frequency of an inverter output voltage, a predetermined carrier frequency is varied to another carrier frequency which is set so as to correspond to the predetermined ratio and a driving signal is generated. However, since there is no margin in the number of revolutions when the frequency of the inverter voltage becomes the predetermined ratio and in the number of revolutions at the time of resonance, oscillation and noise are increased. In addition, according to the predetermined ratio, although it is only defined as an integral multiple, its formula or its numerical ground is not referred to at all, so that its disclosure is inadequate to optimally design the number of revolutions of the motor and the carrier frequency.

According to Japanese Unexamined Patent Publication NO. 2002-186787, since the characteristics of the carrier frequency optimal to the number of revolutions is only found on an experimental basis, the characteristics of the carrier frequency optimal to the number of revolutions are not clear. In addition, although there is shown the example in which the carrier frequency is increased in a region where the number of revolutions of the motor is at low speed and the carrier frequency is decreased as the number of revolutions is increased according to the example of the control pattern of the carrier frequency, when a low-speed device is used in the region where the number of revolutions is at relatively high speed, precision of positional detection is lowered and the control becomes unstable. As a result, an expensive high-speed device has to be used. In addition, since the carrier frequency is increased in the region where the number of revolutions of the motor is at relatively low speed, inverter efficiency deteriorates, and the noise is increased.

In the JP 2000 083 396 there is described a drive method of a brushless motor. A brushless motor drive gear supplies power to a three-phase coil by a PWM controlling of a switching element of an inverter part. In the brushless motor drive gear the drive method of the brushless motor inputs a carrier frequency for the PWM controlling of the switching element as a parameter to a parameter setting part to PWM-control the switching element by the carrier frequency. Here a microcomputer PWM-controls six drive switching elements by generating a carrier frequency selected from the parameter setting part. Hereby the drive method of JP 2000 083 396 aims to provide a drive method of a brushless motor, capable of avoiding resonance with mounted equipment and suppressing noise and temperature rise.

SUMMARY OF THE INVENTION

The present invention was made to solve the above problems and it is an object of the present invention to easily implement a stable operation over a whole region of the number of revolutions even when a low-speed device is used, by clearly articulating a mechanism of a relation between the number of revolutions and a carrier frequency in which a DC brushless motor becomes unstable, and by mathematically expressing the number of revolutions and the carrier frequency in which it becomes unstable.

This object is accomplished according to the present invention by a controller of a DC brushless motor as set out in the appended claim 1.

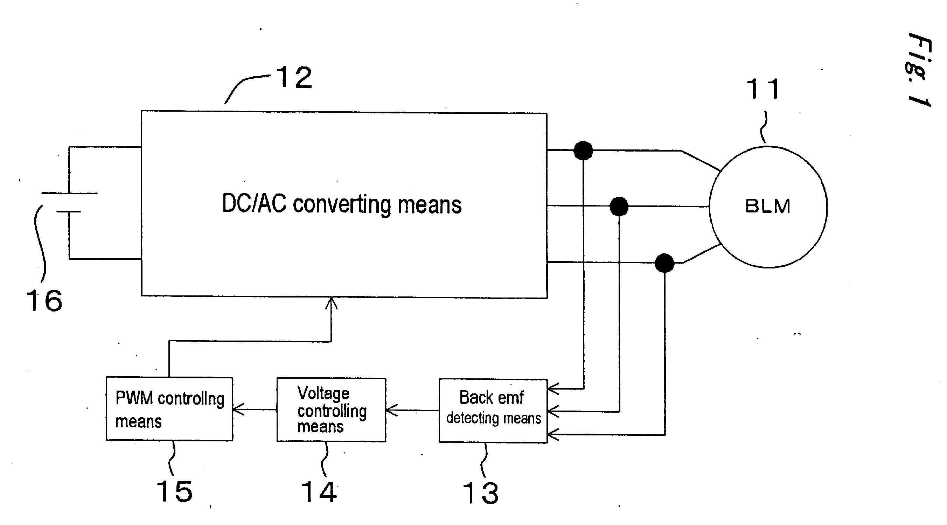

A mechanism of the above problems is examined with reference to Figs. 1 to 6. Fig. 1 is a basic driving control block diagram of a DC brushless motor, which consists of a DC brushless motor 11, DC/AC converting means 12 comprising a switching element, for converting a DC voltage to an AC voltage based on a PWM signal by opening and closing the switching element, to supply it to the DC brushless motor 11, back emf (electromotive force) detecting means 13 for detecting an back emf of the DC brushless motor 11, voltage controlling means 14 for outputting a voltage waveform based on magnetic polar position information output from the back emf detecting means 13, and PWM controlling means 15 for generating a PWM signal based on an output of the voltage controlling means 14.

The DC brushless motor 11 comprises a rotator having a plurality of magnetic poles, and a plurality of stator windings which generate a magnetic field to the rotator, and the back emf detecting means 13 takes in the back emf generated in the stator windings by rotation of the rotator of the DC brushless motor 11 and outputs information of the magnetic polar position and information of the number of revolutions obtained depending on variation of the back emf, that is, a variation of the magnetic polar position of the rotator, to the voltage controlling means 14. The PWM controlling means 15 outputs the PWM signal depending on the output of the voltage waveform from the voltage controlling means 14, to the DC/AC converting means 12, so that the DC brushless motor 11 is controlled by the generated AC voltage.

Here, it is known that a carrier frequency of the PWM signal (hereinafter, referred to as a carrier frequency) affects the back emf waveform of the DC brushless motor 11 and also affects precision of magnetic polar position detection of the rotator of the DC brushless motor 11. Especially, when the number of revolutions fm of the DC brushless motor 11 having magnetic poles, the number of which is "n" (referred to as the number of revolutions, hereinafter) and the carrier frequency fc implements that $fm = fc \times 2 / (3 \cdot n \cdot m)$ [m is a natural number], that is, when the number of revolutions and the carrier frequency becomes a synchronized number of revolutions (referred to as the synchronized number of revolutions 41, hereinafter), there is generated a phenomenon in which even when duty of the PWM signal is increased or decreased, a phase of the PWM driving signal is not changed and the number of revolutions is not increased, nor decreased. Consequently, when it shifts from the synchronized number of revolutions 41, since the phase of the PWM signal is changed in a state in which the duty of the PWM signal is large or small, the number of revolutions is suddenly increased or decreased. As a result, there is generated a phenomenon in which the control of the number of revolutions of the DC brushless motor 11 becomes unstable.

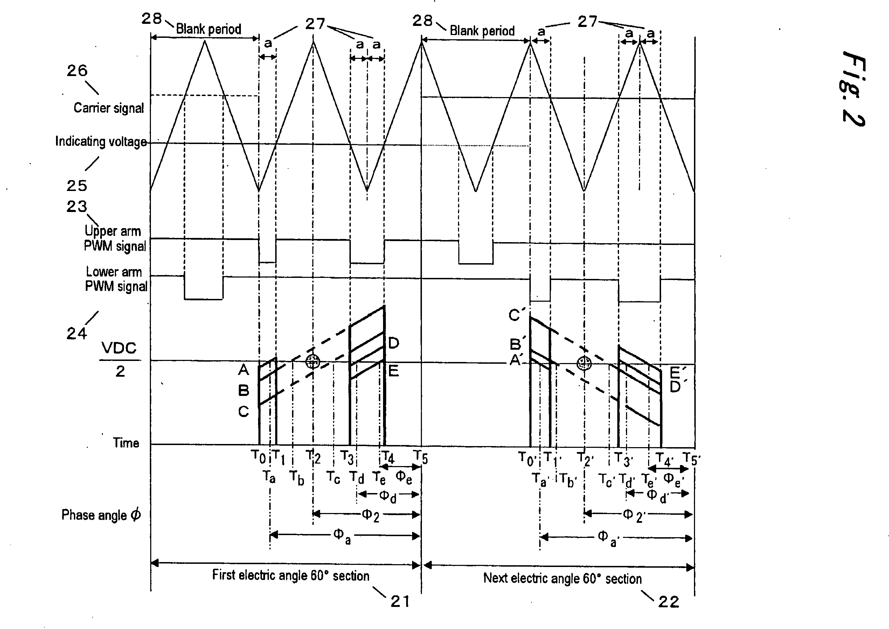

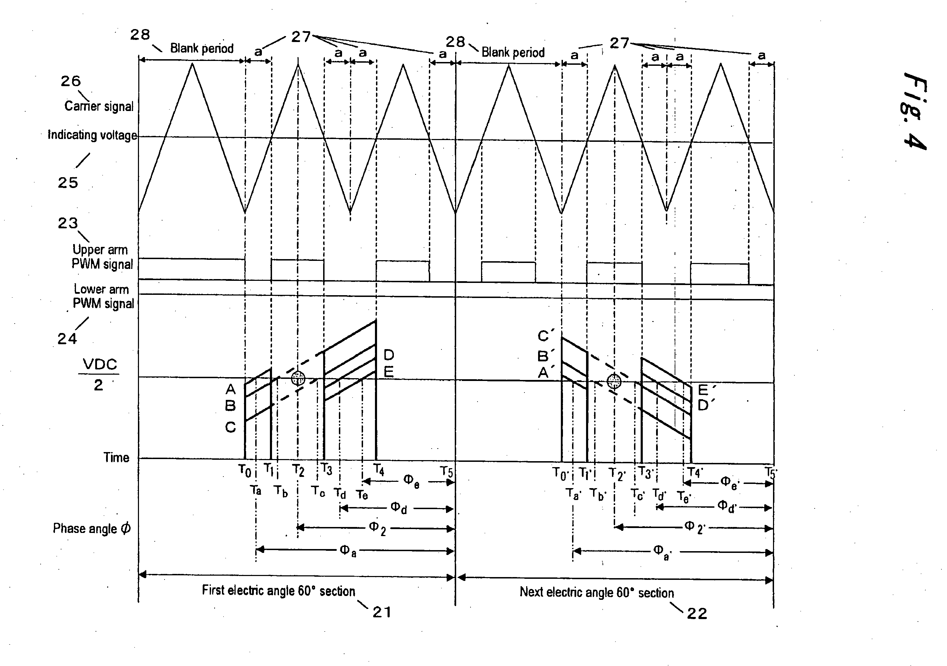

An operation at the synchronized number of revolutions 41 is shown in Fig. 2 in a case of upper and lower arm PWM alternate chopping, and in Fig. 4 in a case of upper arm PWM chopping. In a section 21 of the first electric angle 60° in Fig. 2, reference characters A, B, C, D, and E designate back emf waveforms, reference characters T0, T1, T2, T3, T4, T5, Ta, Tb, Tc, Td and Te designate time in which Ta, Tb, Tc, Td and Te designates time when the voltage waveforms interest with VDC / 2 which is a half voltage of the DC voltage 16 (referred to as a zero cross point hereinafter), and reference characters φa, φ2, φd and φe designate phase angle. In addition, in a section 22 of the next electric angle 60° also, reference characters A', B', C', D', and E' designate back emf waveforms, reference characters T0', T1', T2', T3', T4', T5', Ta', Tb', Tc', Td' and Te' designate time in which Ta', Tb', Tc', Td' and Te' designate zero cross points, and reference characters φa', φ2', φ d' and φe' designate phase angle.

A description is made of an operation when $fm = fc \times 2 / (3 \cdot n \cdot m)$ [m is a natural number] in the upper and lower arm PWM alternate chopping and m is an odd number. Since the operation is the same when the m is an odd number, a description is made of a case m = 5, especially here. Here, an upper arm PWM signal 23 and a lower arm PWM signal 24 are generated by comparing an indication voltage 25 output from the voltage controlling means 14 with a carrier signal 26. In the section 21 of the first electric angle 60°, the zero cross point of the back emf waveform E is at time Te and the phase angle φe is provided until phase switching. In the section 22 of the next electric angle 60°, the zero cross point of the back emf waveform E' is at time Te' and the phase angle $\phi$e' is provided until phase switching. Here, $\phi$e = $\phi$e' in view of control algorithm.

Here, when the back emf waveform E is moved to the back emf waveform D because of load change or the like of the DC brushless motor 11, the zero cross point is at time Td and the phase angle is $\phi$d in the section 21 of the first electric angle 60°. In the section 22 of the next electric angle 60° also, according to the back emf waveform D', the zero cross point is at time Td', the phase angle is $\phi$d' and $\phi$d = $\phi$d', so that the time T5 and T5' of the phase switching vary depending on the back emf waveform, and there is no problem in view of control. This is in the case where zero cross points of the back emf waveform D, the back emf waveform E, the back emf waveform D' and the back emf waveform E' exist in back emf detectable regions a27.

Meanwhile, in the case of the back emf waveform B and the back emf waveform C, although the zero cross points are at the time Tb and Tc in the section 21 of the first electrical angle 60° originally, since they do not exist in the back emf detectable regions a27, the zero cross points are estimated as at time T2. In general, it is calculated in many cases such that T2 = (T1 + T3) / 2 and T3 · T2 = T2 · T1. Thus, when the zero cross point exists in a region other than the back emf detectable region a27, even when the back emf waveform C is moved to the back emf waveform B because of the variation of the motor load, or even when the back emf waveform B is moved to the back emf waveform C, the zero cross point is estimated as at time T2 and the phase angle $\phi$2 is set regardless of the original back emf waveform.

In the section 22 of the next electric angle 60° also, the phase angle is such that $\phi$2 = $\phi$2'. Therefore, even when the back emf waveform is varied, the time in the section 21 of the first electric angle 60° and the section 22 of the next electric angle 60° does not change. At this time, when the waveform is varied from the back emf waveform C to the back emf waveform B, the motor is in an over-excitation condition, and when the waveform is varied from the back emf waveform B to the back emf waveform C, the motor is in a weak field condition. In the over-excitation condition, the back emf waveform is advanced in phase from the phase current waveform and in the weak field condition, the back emf waveform is delayed in phase from the phase current waveform. In these conditions, a peak current, an oscillation and noise of the phase current is increased. When it lapses into this synchronized number of revolutions 41, even if the indication voltage 25 is increased in order to increase the number of revolutions, the number of revolutions is not increased as long as the zero cross point exists in the region other than the back emf detectable region a27. In addition, when the over-excitation condition is further developed and the waveform becomes back emf waveform A from the back emf waveform B or when the indication voltage 25 is increased so that Tb < = T1, the phase angle $\phi$a becomes equal to the phase angle $\phi$2 at the time Ta at the zero cross point. As a result, the number of revolutions is abruptly increased by 5 to 10 Hz, causing the noise and the oscillation to be increased.

In the meantime, when the weak field condition is further developed so that the waveform becomes back emf waveform D from the back emf waveform C or when the indication voltage 25 is lowered so that Tc $\geq$ T3, the phase angle $\phi$d becomes equal to the phase angle $\phi$2 at the time Td at the zero cross point. As a result, the number of revolutions is abruptly lowered by 5 to 10 Hz, causing the noise and the oscillation to be increased. Here, a hunting amount $\Delta$fmu when the number of revolutions of the motor is increased can be expressed as follows, using three parameters such as the number of revolutions fm, the carrier frequency fc and DUTY which is a time ratio when the PWM signal is on.

$$\Delta fmu = 2 / \{2 / fm - 3 \cdot n \cdot (1 - DUTY) / fc\} - fm$$

A hunting amount $\Delta$fmd when the number of revolutions is decreased can be also expressed as follows.

$$\Delta fmd = fm - 2 / \{2 / fm + 3 \cdot n \cdot (1 - DUTY) / fc\}$$

(In addition, it is assumed that the phase angle $\phi$ at the section 21 of the first electric angle 60° is equal to that at the section 22 of the next electric angle 60°).

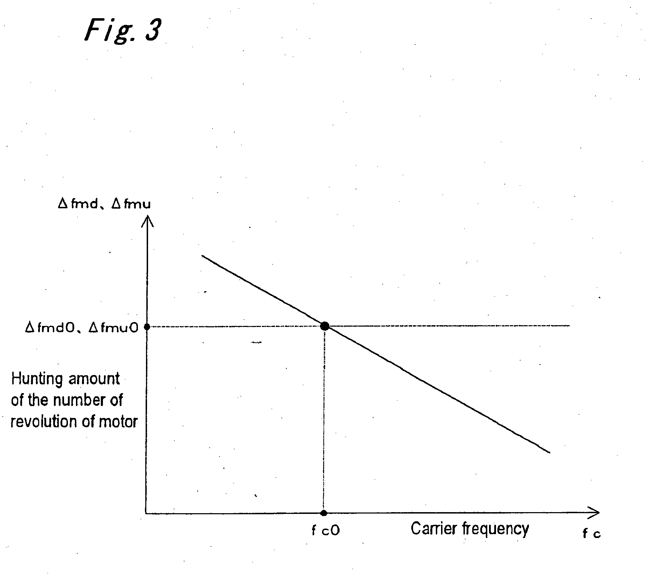

Fig. 3 shows a relation between the hunting amount and the carrier frequency. As shown in Fig. 3, in order to limit the hunting amount $\Delta$fmu and $\Delta$fmd when the number of revolutions is increased and decreased within predetermined ranges $\Delta$fmu0 and $\Delta$fmd0, respectively the carrier frequency has to be less than fc0. Thus, the synchronized number of revolutions 41 when the m is an odd number in the case of the upper and lower arm PWM alternate chopping is especially called a strong resonance point.

The above phenomenon is generated when m is an even number and fm = fc $\times$ 2 / (3 · n · m) [m is a natural number ] in the case of the upper arm PWM chopping or the lower arm PWM chopping, and the synchronized number of revolutions 41 at this time is especially called the strong resonance point. Although only the case of the upper arm PWM chopping when m = 6 is shown in Fig. 4, the operation is all the same when m is an even number in the case of the upper arm PWM chopping or the lower arm PWM chopping. In addition, since the reference characters and their operations are the same as the case of the upper and lower arm PWM alternate chopping, their description is omitted.

In addition, in the high rotation region of the DC brushless motor 11, the zero cross point of the back emf hides behind the inverter output voltage region and it cannot be detected in some cases. Especially, the control becomes unstable when $k < 5$ in the case $fm = fc \times 2 / (3 \cdot n \cdot k)$ [k is a natural number], and a stepping-out phenomenon occurs.

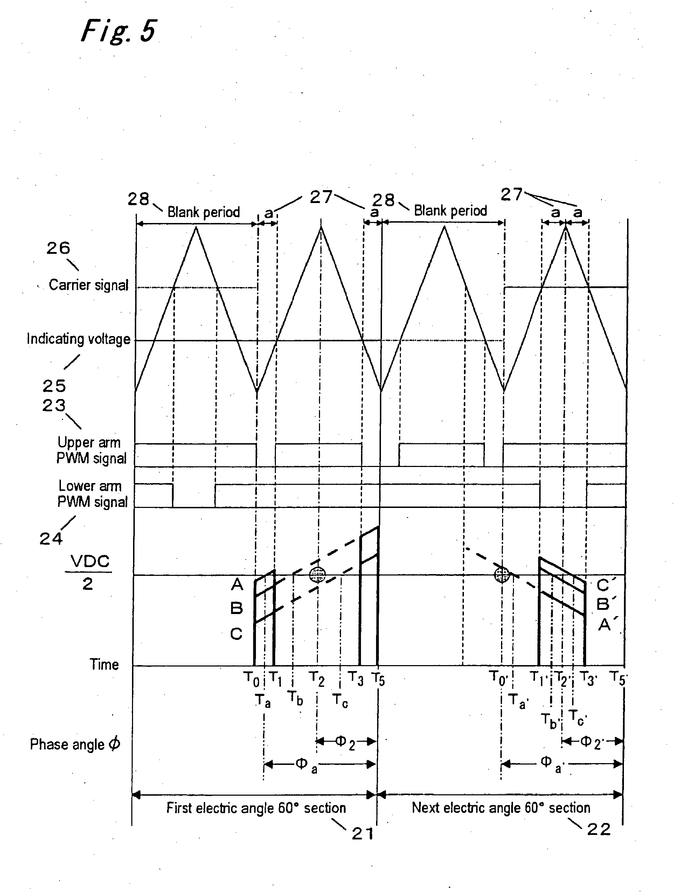

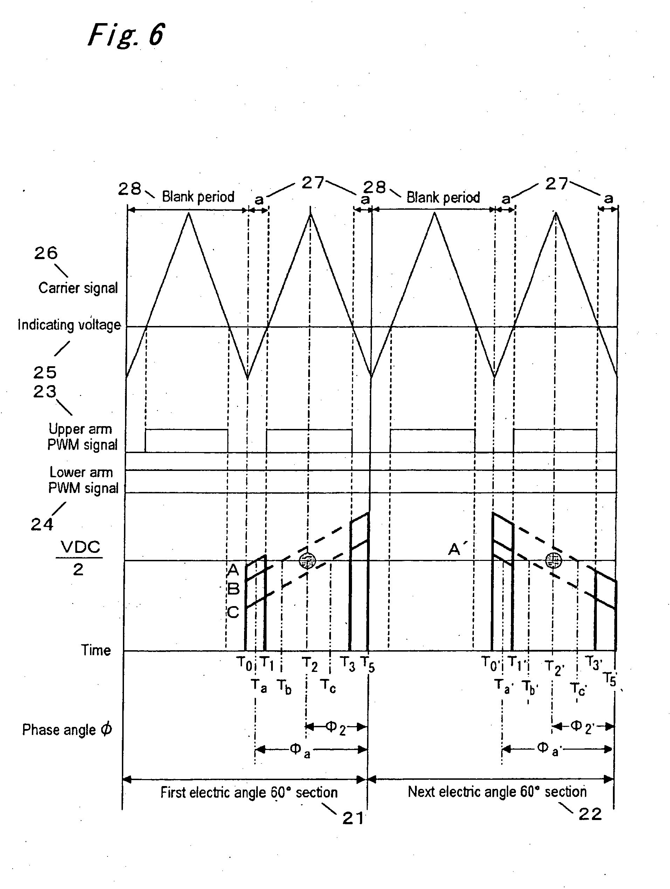

A conventional example in which the back emf detectable region a27 is small is shown in Fig. 5 in the case of the upper and lower arm PWM alternate chopping and in Fig. 6 in the case of the upper arm PWM chopping. Fig. 5 shows a case $k = 4$ in the case of the upper and lower arm PWM alternate chopping and $fm = fc \times 2 / (3 \cdot n \cdot k)$ [k is a natural number]. There is a blank period (referred to as the blank period 28 hereinafter) of back emf detection between the phase switching time T5.and the time T0'

Referring to the blank period 28, although the phase is changed to the lower arm chopping at the phase switching time T5 originally, the upper arm chopping continues actually for one cycle of the carrier frequency after the phase switching. The blank period 28 is generally for one cycle of the carrier frequency in a general microcomputer. Therefore, the back emf detectable region a27 is between the time T1' and the time T3', which is as small as 2a. As a result, since the magnetic polar position cannot be accurately detected, the control becomes unstable and the stepping-out phenomenon occurs. Although a description was made when $k = 4$ in the case $fm = fc \times 2 / (3 \cdot n \cdot k)$ [k is a natural number], since the period of the back emf detectable region a27 is less than 3a when $k < 5$, the magnetic polar position cannot be accurately detected.

The above phenomenon is generated in the case of the upper arm PWM chopping or the lower arm PWM chopping when $k < 5$ in the case $fin = fc \cdot 2 / (3 \cdot n \cdot k)$ [k is a natural number]. Although Fig. 6 shows the case of the upper arm PWM chopping when $k = 4$, since the period of the back emf detectable region a27 is as small as 2a for the section of the electric angle 60° when $k < 5$ similar to the case of the upper and lower arm PWM alternate chopping, the magnetic polar position cannot be accurately detected.

Therefore, in order to increase a maximum number of revolutions, conventionally, it is necessary to highly set the carrier frequency fc so as to correspond to a maximum number of revolutions fmmax such that $k \geq 5$ in the case $fc = 3 \cdot n \cdot k \cdot fmmax / 2$ [k is a natural number]. However, in this case, there is a problem not only that inverter efficiency is lowered and noise is increased when the number of revolutions is at low speed, but also that an expensive high-speed device has to be used.

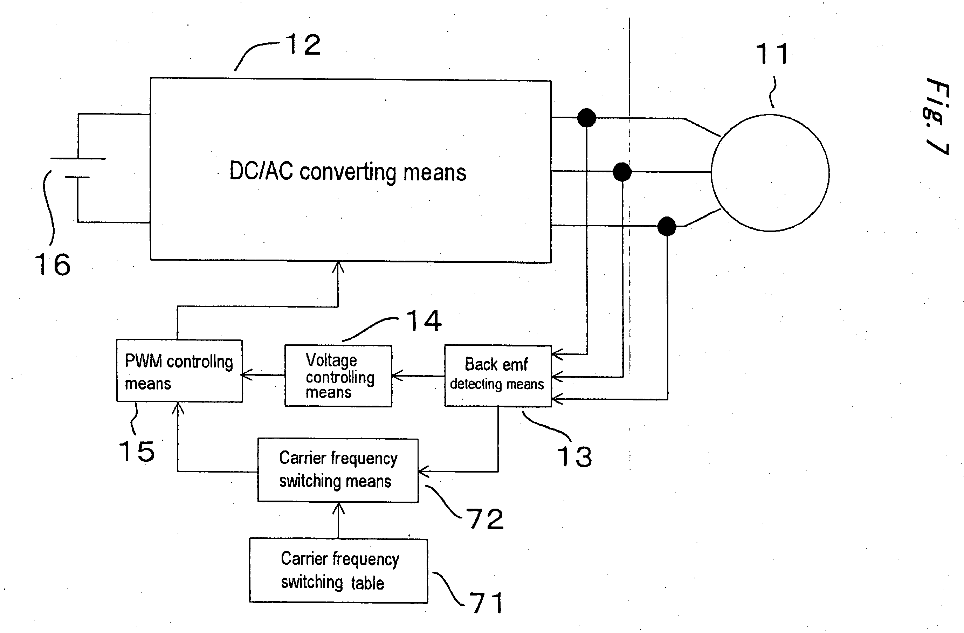

Thus, in order to solve the above problems, as shown in Fig. 7, a controller of a DC brushless motor according to the present invention comprises a DC brushless motor 11 having magnetic poles, the number of which is "n", DC/AC converting means 12 comprising a switching element, for converting a DC voltage 16 to an AC voltage based on a PWM signal by opening and closing the switching element, to supply it to the DC brushless motor 11, back emf detecting means 13 for detecting an back emf of the DC brushless motor 11, voltage controlling means 14 for outputting a voltage waveform based on magnetic polar position information output from the back emf detecting means 13, a carrier frequency switching table 71 which has been previously set for switching the carrier frequency 7, carrier frequency switching means 72 for switching the carrier frequency 7, and PWM controlling means 15 for generating the PWM signal based on outputs of the back emf detecting means 3 and the frequency switching means 72. Thus, the carrier frequency 7 is switched based on the information of the number of rotations obtained from the back emf detecting means 3, and the table content which has been previously set in the carrier frequency switching table 71 by a predetermined condition.

BRIEF DESCRIPTION OF THE DRAWINGS

Fig. 1 shows a block diagram of a basic driving control of a DC brushless motor;

Fig. 2 shows an example in which the number of revolutions and a carrier frequency are synchronized in a case of an upper and lower arm PWM alternate chopping (m = 5);

Fig. 3 is a graph showing a relation between a hunting amount of the number of revolutions of a motor and a carrier frequency;

Fig. 4 shows an example in which the number of revolutions and a carrier frequency are synchronized in a case of an upper arm PWM chopping (m = 6);

Fig. 5 shows an example in which an back emf detectable region is small in the case of the upper and lower arm PWM alternate chopping (k = 4);

Fig. 6 shows an example in which an back emf detectable region is small in the case of the upper arm PWM chopping (k = 4);

Fig. 7 shows a block diagram of a driving control of a DC brushless motor according to an embodiment 1;

Fig. 8 shows a carrier frequency switching table of the DC brushless motor according to the embodiment 1;

Fig. 9 shows an example of the case of the upper and lower arm PWM alternate chopping (m = k = 6); and

Fig. 10 shows an example of the case of the upper arm PWM chopping (m = k = 5)

DESCRIPTION OF THE PREFERRED EMBODIMENTS

According to the present invention, a carrier frequency is switched based on information of the number of revolutions obtained by back emf detecting means 3, and a table content set in a carrier frequency switching table 71 by a predetermined condition. The carrier frequency switching table 71 sets the number of revolutions and the carrier frequency so that the number of revolutions fm may not be equal to the number of revolutions of the carrier frequency fc : fc $\times$ 2 /( 3 · n · m) [m is a natural number]. Especially, m is an odd number in a case of an upper and lower arm PWM alternate chopping. Especially, m is an even number in a case of upper arm PWM chopping or lower arm PWM chopping.

In addition, since the synchronized number of revolutions 41 can be avoided by using the carrier frequency switching table 71 set as described above, a hunting amount of the number of revolutions of the motor when the number of revolutions is increased or decreased can be limited within a predetermined range. In addition, a maximum number of revolutions of a DC brushless motor 11 at each carrier frequency in the carrier frequency switching table is set so as to be less than that fm = fc $\times$ 2 / (3 · n · k) [k is a natural number]. In the case of the upper and lower arm PWM alternate chopping especially, it is k > 5. In the case of the upper arm PWM chopping or the lower arm PWM chopping especially, it is k $\geq$ 5.

Hereinafter, embodiments of a controlling method of the DC brushless motor according to the present invention are described. However, the present invention is not limited to the embodiments.

Embodiment 1

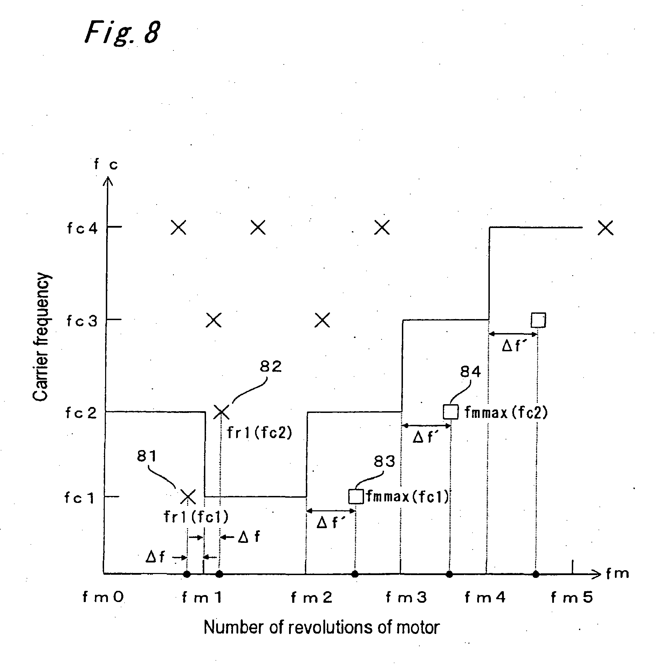

A control method of a DC brushless motor according to an embodiment 1 is described with reference to Figs. 7 and 8. Fig. 7 is a block diagram of driving control of the DC brushless motor according to the embodiment 1. Referring to Fig. 7, a controller of the DC brushless motor comprises a DC brushless motor 11 having magnetic poles, the number of which is "n", DC/AC converting means 12 comprising a switching element, for converting a DC voltage 16 to an AC voltage based on a PWM signal by opening and closing the switching element, to supply it to the DC brushless motor 11, back emf detecting means 13 for detecting an back emf of the DC brushless motor 11, voltage controlling means 14 for outputting a voltage waveform based on magnetic polar position information output from the back emf detecting means 13, a carrier frequency switching table 71 which has been previously set for switching a carrier frequency 7, carrier frequency switching means 72 for switching the carrier frequency 7, and PWM controlling means 15 for generating the PWM signal based on outputs of the back emf detecting means 13 and the frequency switching means 72.

Fig. 8 shows an example of a table content set in the carrier frequency switching table 71 by a predetermined condition. Referring to Fig. 8, reference character fc1 designates a first carrier frequency, reference character fc2 designates a second carrier frequency, reference character fc3 designates a third carrier frequency, reference character fc4 designates a fourth carrier frequency, and reference character fr1 (fc1) designates a first synchronized number of revolutions 81 in which the number of revolutions becomes unstable at the first carrier frequency fc1 and it is expressed as follows.

$$ fr1\ (fc1) = fc1 \times 2 / (3 \cdot n \cdot m)\ [m\ is\ a\ natural\ number] $$

Similarly, reference character fr1 (fc2) designates a first synchronized number of revolutions 82 at the second carrier frequency fc2. In addition, reference character fmmax (fc1) designates a maximum number of revolutions 83 at the first carrier frequency fc1 and it is expressed as follows.

$$ fmmax\ (fc1) = fc1 \cdot 2 / (3 \cdot n \cdot k)\ [k\ is\ a\ natural\ number] $$

Similarly, reference character fmmax (fc2) designates a maximum number of revolutions 84 at the second carrier frequency fc2.

Control operations of the DC brushless motor 11 are described hereinafter. First, the back emf detecting means 13 for detecting the back emf generated when the DC brushless motor 11 is rotated outputs information of the magnetic polar position and information of the number of revolutions to the voltage controlling means 14 and the carrier frequency switching means 72. The PWM controlling means 15 outputs the PWM signal to the DC/AC converting means 12 based on the voltage waveform output from the voltage controlling means 14 and the output of the carrier frequency switching means 72 which switches the carrier frequency 7. In addition, the carrier frequency switching means 72 selects the carrier frequency 7 which has been previously set based on the information of the number of revolutions output from the back emf detecting means 13 and the carrier frequency switching table 71, and outputs it to the PWM controlling means 15.

Here, as shown in Fig. 8, according to the carrier frequency switching table 71, the number of revolutions is divided into a plurality of regions such as a first region from the number of revolutions fm0 to fm1, a second region from the number of revolutions fm1 to fm2, a third region from the number of revolutions fm2 to fm3, a fourth region from the number of revolutions fm3 to fm4, and a fifth region from the number of revolutions fm4 to fm5. It is set that the carrier frequency fc2 is selected in order to avoid the first synchronized number of revolutions fr1 (fc1) (81) at the first carrier frequency fc1 in the first region of the number of revolutions of the DC brushless motor 11, the carrier frequency fc1 is selected in order to avoid the first synchronized number of revolutions fr1 (fc2)(82) at the second carrier frequency fc2 in the second region, and the carrier frequency fc2 is selected in order to avoid the maximum number of revolutions fmmax (fc1)(83) at the first carrier frequency fc1 in the third region 60.

In addition, when this control is applied to a DC brushless motor for driving a compressor in an air conditioner, a margin such that $\Delta f = fm1 - fr1$ (fc1) is applied to the number of revolutions fm1 and the first synchronized number of revolutions fr1 (fc1) (81) at the first carrier frequency fc1, which is such that $\Delta f = 2$ to 3 Hz in general, and a margin such that $\Delta f' = fm2 + fmmax$ (fc1) is applied to the number of revolutions fm2 and the maximum synchronized number of revolutions fmmax (fc1) (83) at the first carrier frequency fc1, which is such that $\Delta f' = 5$ to 6 Hz in general.

Therefore, the first carrier frequency fc1 is set based on the following two conditions. That is, one is that fc1 = $(fm1 - \Delta f) \times (3 \cdot n \cdot m) / 2$ [m is a natural number] which is set by the synchronized number of revolutions 41, and the other is that fc1 = $(fm2 + \Delta f') \times (3 \cdot n \cdot 5) / 2$ which is set by the maximum number of revolutions. Similarly, the second carrier frequency is set based on that fc2 = $(fm1 + \Delta f) \times (3 \cdot n \cdot m) / 2$ [m is a natural number] and fc2 = $(fm3 + \Delta f') \times (3 \cdot n \cdot 5) / 2$. The same applies to the third and fourth carrier frequencies.

Meanwhile, the carrier frequency switching means 72 switches the carrier frequency to the second carrier frequency fc2 when the information of the number of revolutions from the back emf detecting means 13 is in the first region, to the first carrier frequency fc1 when the information is in the second region and to the second carrier frequency fc2 when the information is in the third region, and outputs it to the PWM controlling means 15 to drive the DC/AC converting means 12.

In addition, in the carrier frequency switching table 71, besides the above such as regions of the number of revolutions and the carrier frequency, a plurality of patterns of number of revolutions and carrier frequencies are set as shown in Fig. 8. When the number of revolutions coincides with the above pattern, the carrier frequency switching means 72 outputs the carrier frequency which has been previously decided in the carrier frequency switching table 71 for that number of revolutions, to the PWM controlling means 15 to drive the DC/AC converting means 12.

The DC brushless motor 11 can be controlled by using the above carrier frequency switching table 71 so that the case fm = $fc \times 2 / (3 \cdot n \cdot m)$ [m is a natural number] may not occur. In addition, when the carrier frequency switching table 71 is set as described above, since the synchronized number of revolutions 41 can be avoided, the hunting amount of the number of revolutions of the motor when the number of revolutions is increased or decreased can be limited within the predetermined range. In addition, as described above, the hunting amount $\Delta fmu$ and $\Delta fmd$ when the number of revolutions of the motor is increased or decreased can be expressed as follows.

$$\Delta fmu = 2 / \{2 / fm - 3 \cdot n \cdot (1-DUTY) / fc\} - fm$$

$$\Delta fmd = fm - 2 / \{2 / fm + 3 \cdot n \cdot (1-DUTY) / fc\}$$

They have characteristics shown in Fig. 3.

Furthermore, the DC brushless motor can be controlled so that the maximum number of revolutions of the DC brushless motor 11 may not be more than that fm = $fc \times 2 / (3 \cdot n \cdot k)$ [k is a natural number].

As described above, according to the controller of the DC brushless motor of the embodiment 1, the carrier frequency switching table 71 is set as described above, so that the relation of the number of revolutions and the carrier frequency in which the DC brushless motor 11 becomes unstable is mathematically expressed. As a result, a stable operation can be easily implemented over a whole region of the number of revolutions even when a low-speed device is used.

Embodiment 2

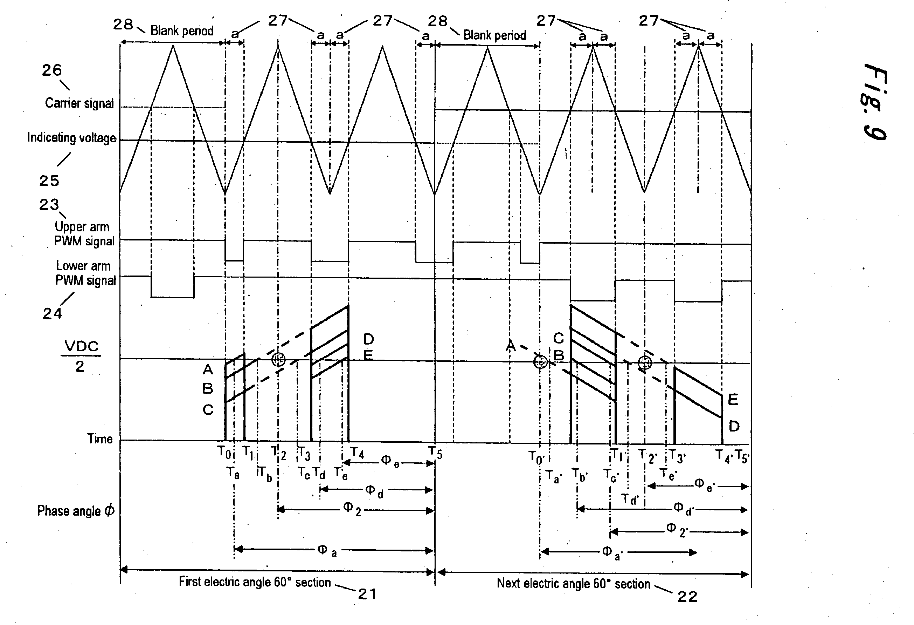

An embodiment 2 of the present invention is described with reference to Figs. 7, 8 and 9. Figs. 7 and 8 are the same as in the embodiment 1. Fig. 9 shows a case of the upper and lower arm PWM alternate chopping, and a case where m = 6 when fm = fc $\times$ 2 / (3 · n · m) [m is a natural number]. When m is an even number, the operation is the same. In addition, reference characters are the same as in the conventional example.

There is a plurality of synchronized number of revolutions 41 in which the number of revolutions becomes unstable every carrier frequency. And the synchronized number of revolutions 41 is expressed such that fr (fc) = fc · 2 / (3 · n · m) [m is a natural number]. In the case of the upper and lower arm PWM alternate chopping especially, since a strong resonance point is provided when the m is an odd number as described above, the DC brushless motor 11 can be stably controlled by setting the carrier frequency switching table 71 so as to avoid the strong resonance point in which m becomes an odd number when fm = fc · 2 / (3 · n · m) [m is a natural number].

Here, a description is made of a case m = 6 when fm =fc · 2 / (3 · n · m) [m is a natural number] as an example when m is an even number, with reference to Fig. 9. Similar to the conventional example, since zero cross points of back emf waveforms A, D and E exist in back emf detectable regions a27, there is no problem in control.

Meanwhile, in the case of back emf waveform B and back emf waveform C, although zero cross points are at time Tb and Tc in a section 21 of the first electrical angle 60° originally, since they do not exist in the back emf detectable region a27, the zero cross points are estimated as time T2 in this section. In general, it is calculated in many cases such that T2 = (T1 + T3) / 2 and T3 - T2 = T2 · T 1. Thus, in the case where the times Tb and Tc at the zero cross points exist in regions other than the back emf detectable regions a27, even when the waveform is varied from the back emf waveform C to the back emf waveform B because of the variation of the motor load, since the time at zero cross point is estimated as time T2, phase angle φ2 is set regardless of the original back emf waveform.

In a section 22 of the next electric angle 60° also, although the phase angle is set such that φ2 = φ2', since the times Tb' and Tc' at the zero cross points of the back emf waveforms B' and C' exist in the back emf detectable region a27, the timing of phase changing is set at φ2' so that the carrier frequency and the number of revolutions are not synchromized in the section 22 of the next electrical angle 60° as shown in Fig. 9.

In addition, since the synchronized umber of revolutions 41 can be avoided by setting the carrier frequency switching table 71 as described above, the hunting amount when the number of revolutions is increased or decreased can be limit within the predetermined range.

Therefore, when the PWM signal is in the case of the upper and lower PWM, the carrier frequency switching table is set so as to especially avoid the strong resonance point in which m becomes an odd number when fm = fc · 2 / (3 · n · m) [m is a natural number]. As a result, the stable operation can be easily implemented over a whole region of the number of revolutions even when a low-speed device is used.

Embodiment 3

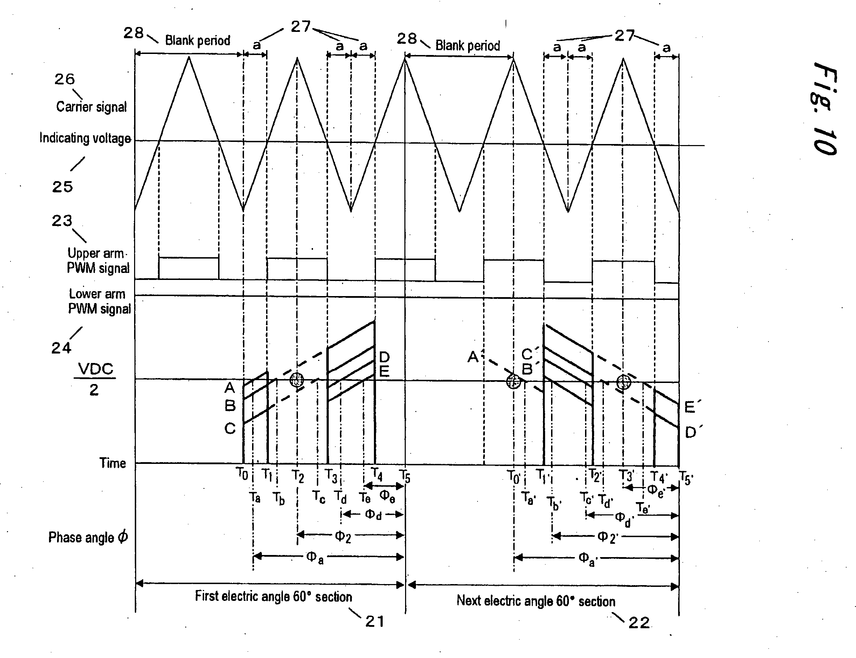

An embodiment 3 of the present invention is described with reference to Figs. 7, 8 and 10. Figs. 7 and 8 are the same as in the embodiment 1. Fig. 10 shows a case of the upper arm PWM chopping, and a case where m = 5 when fm = fc x 2 / (3 · n · m) [m is a natural number]. When m is an odd number, the operation is the same.

In the case of the upper arm PWM chopping, since the strong resonance point is provided when m is an even number as described above, the DC brushless motor 11 can be stably controlled by setting the carrier frequency switching table so as to avoid the strong resonance point in which m becomes an even number when fm = fc · 2 / (3 · n · m) [m is a natural number].

In addition, since the synchronized umber of revolutions 41 can be avoided by setting the carrier frequency switching table 71 as described above, the hunting amount when the number of revolutions is increased or decreased can be limit within a predetermined range. Here, although Fig. 10 shows the case m = 5 as an example in which m is an odd number, since its content is the same as in the embodiment 2, its description is omitted.

Embodiment 4

An embodiment 4 of the present invention is described with reference to Figs. 7, 8 and 9. Figs. 7 and 8 are the same as in the embodiment 1. Fig. 9 shows a case of the upper and lower arm PWM alternate chopping, and a case where k = 5 when fm = fc · 2 / (3 · n · k) [k is a natural number].

In this case, since the back emf detectable regions a27 is increased from T1' to T2', and from T3' to T4'so that it becomes a period of 4a, the magnetic polar position can be accurately detected. However, since the strong resonance point is provided when k = 5 as described above, in the case of the upper and lower arm PWM alternate chopping, the maximum number of revolutions is provided by setting that k > 5 when fm = fc · 2 / (3 · n · k)) [k is a natural number].

Therefore, in the case of the upper and lower arm PWM alternate chopping, since the maximum number of revolutions is provided by setting that k > 5 when fm =fc · 2 / (3 · n · k) [k is a natural number] in the carrier frequency switching table 71, the back emf detectable region a27 can be surely provided, so that stable control can be implemented and the maximum number of revolutions can be increased by switching the carrier frequency to the frequency fc1 or fc2 as shown in the embodiment 1.

Embodiment 5

An embodiment 5 of the present invention is described with reference to Figs. 7, 8 and 10. Figs. 7 and 8 are the same as in the embodiment 1. Fig. 10 shows a case of the upper arm PWM chopping, and a case where k = 5 when fm = fc · 2 / (3 · n · k) [k is a natural number]. In this case, since an back emf detectable regions a27 is increased from T1' to T3', and from T4' to T5' so that it becomes a period of 3a, the magnetic polar position can be accurately detected.
Therefore, in the case of the upper arm PWM chopping, the maximum number of revolutions is provided by setting that k ≥ 5 when fm =fc · 2 / (3 · n · k) [k is a natural number] in the carrier frequency switching table 71. As a result, the back emf detectable region a27 can be surely provided, stable control can be implemented and the maximum number of revolutions can be increased by switching the carrier frequency to the frequency fc1 or fc2 as shown in the embodiment 1.
As described above, according to the present invention, since the carrier frequency is switched when the number of revolutions obtained by the back emf detecting means reaches the number of revolutions set in the carrier frequency switching table, the stable operation can be implemented over the whole region of the number of revolutions of the DC brushless motor, and since a high-speed device in not required in the control, the controller can be provided at low cost.

**Claims**

1.    A controller of a DC brushless motor (11) comprising:

DC/AC converting means (12) comprising a switching element, for converting a DC voltage to an AC voltage based on a PWM signal by opening and closing the switching element, to supply it to the DC brushless motor (11) having magnetic poles, the number of which is n;
voltage controlling means (14) for outputting a voltage waveform;
carrier frequency switching table (71) previously set for switching a carrier frequency of the PWM signal;
carrier frequency switching means (72) for switching the carrier frequency; and
PWM controlling means (15) for generating a PWM signal,
wherein the carrier frequency switching table (71) has a table content previously set by a predetermined condition, and the PWM signal is generated by the carrier frequency switching means (72) based on the carrier frequency switching table (71);
**characterized by**
back emf detecting means (13) for detecting a back emf of the DC brushless motor (11);
wherein the voltage controlling means (14) outputs the voltage waveform based on magnetic polar position information output from the back emf detecting means (13);
wherein the PWM controlling means (15) generates the PWM signal based on outputs of the back emf detecting means (13) and the carrier frequency switching means (72),
wherein the carrier frequency switching means (72) switches the carrier frequency fc based on information of the number of revolutions obtained by the back emf detecting means (13), and the table content of the carrier frequency switching table (71) such that the case fm = 2/(3 x n x m), m being a natural number, does not occur, and such that a hunting amount when the number of revolutions of the DC brushless motor (11) having the n magnetic poles is increased or decreased is limited in a predetermined range, wherein the hunting amount $\Delta$fmu when the number of revolutions is increased is expressed as

$$\Delta fmu = 2 / \{2 / fm - 3 \cdot n \cdot (1\text{-}DUTY) / fc\} - fm$$

and the hunting amount $\Delta$fmd when the number of revolutions is decreased is expressed as

$$\Delta fmd = fm - 2 / \{2 / fm + 3 \cdot n \cdot (1\text{-}DUTY) / fc\},$$

with fm being the number of revolutions of the DC brushless motor (11) and DUTY being the duty of the PWM signal.

2. The controller of the DC brushless motor (11) according to claim 1,
wherein the number of revolutions of the DC brushless motor (11) and the carrier frequency are set by the predetermined condition, in such a manner that the number of revolutions of the DC brushless motor (11) having n magnetic poles may not coincide with 2 / (3 · n · m)-fold carrier frequency of the PWM signal [m is a natural number].

3. The controller of the DC brushless motor (11) according to claim 1,
wherein the number of revolutions of the DC brushless motor (11) and the carrier frequency are set by the predetermined condition, in such a manner that the maximum number of revolutions of the DC brushless motor (11) having n magnetic poles may not be more than 2 / (3 • n • k)-fold carrier frequency of the PWM signal [k is a natural number].

4. The controller of the DC brushless motor (11) according to claim 2,
wherein the natural number m is an odd number in a case of an upper and lower arm PWM alternate chopping,

5. The controller of the DC brushless motor (11) according to claim 2,
wherein the natural number m is an even number in a case of an upper arm PWM chopping or a lower arm PWM chopping.

6. The controller of the DC brushless motor (11) according to claim 3,
wherein the natural number k is such that k > 5 in a case of an upper and lower arm PWM alternate chopping.

7. The controller of the DC brushless motor (11) according to claim 3,
wherein the natural number k is such that k $\geq$ 5 in a case of an upper arm PWM chopping or a lower arm PWM chopping.


**Patentansprüche**

1. Steuervorrichtung eines bürstenlosen Gleichstrommotors (11) umfassend:

ein Gleichstrom/Wechselstrom-Richtmittel (12) mit einem Schaltmittel, zum Umwandeln einer Gleichspannung in eine Wechselspannung auf der Grundlage eines PWM-Signals durch Öffnen und Schließen des Schaltmittels, um damit den bürstenlosen Gleichstrommotor (11) zu versorgen, welcher Magnetpole aufweist, deren Anzahl n beträgt;
ein Spannungssteuermittel (14) zum Ausgeben einer Spannungswellenform;
eine Trägerfrequenz-Umschalttabelle (71), welche voreingestellt ist zum Umschalten einer Trägerfrequenz des PWM-Signals;
ein Trägerfrequenz-Umschaltmittel (72) zum Umschalten der Trägerfrequenz; und
ein PWM-Steuermittel (15) zum Erzeugen eines PWM-Signals,
wobei die Trägerfrequenz-Umschalttabelle (71) einen durch eine vorbestimmte Bedingung voreingestellte Tabelleninhalt hat, und wobei das PWM-Signal von dem Trägerfrequenz-Umschaltmittel (72) auf der Grundlage der Trägerfrequenz-Umschalttabelle (71) erzeugt wird;
**gekennzeichnet durch**
ein Mittel (13) zum Nachweisen einer gegenelektromotorischen Kraft des bürstenlosen Gleichstrommotors (11);
wobei das Spannungssteuermittel (14) die Spannungswellenform auf der Grundlage einer Magnetpolpositionsinformation ausgibt, welche von dem Mittel (13) zum Nachweisen einer gegenelektromotorischen Kraft ausgegeben wird;
wobei das PWM-Steuermittel (15) das PWM-Signal ausgibt auf der Grundlage von Ausgaben des Mittels (13) zum Nachweisen einer gegenelektromotorischen Kraft und des Trägerfrequenz-Umschaltmittels (72),
wobei das Trägerfrequenz-Umschaltmittel (72) die Trägerfrequenz fc umschaltet auf der Grundlage einer Information über die Umdrehungszahl, erhalten von dem Mittel (13) zum Nachweisen einer gegenelektromotorischen Kraft, und des Tabelleninhalts der Trägerfrequenz-Umschalttabelle (71), so dass der Fall fm = 2/(3 x n x m), wobei m eine natürliche Zahl ist, nicht auftritt, und so dass eine Pendelungsmenge, wenn die Anzahl der Umdrehungen des bürstenlosen Gleichstrommotors (11) mit den n Magnetpolen erhöht oder verringert wird, auf einen vorbestimmten Bereich beschränkt ist, wobei die Pendelungsmenge $\Delta fmu$, wenn die Zahl der Umdrehungen erhöht wird, ausgedrückt ist als

$$\Delta fmu = 2 / \{2 / fm - 3 \cdot n \cdot (1\text{-DUTY}) / fc\} - fm$$

und wobei die Pendelungsmenge $\Delta fmd$, wenn die Anzahl der Umdrehungen verringert wird, ausgedrückt ist als

$$\Delta fmd = fm - 2 / \{2 / fm + 3 \cdot n \cdot (1\text{-DUTY}) / fc\},$$

wobei fm die Anzahl der Umdrehungen des bürstenlosen Gleichstrommotors (11) ist, und wobei DUTY der Tastgrad des PWM-Signals ist.

2. Steuervorrichtung eines bürstenlosen Gleichstrommotors (11) nach Anspruch 1, wobei die Anzahl der Umdrehungen des bürstenlosen Gleichstrommotors (11) und die Trägerfrequenz von der vorbestimmten Bedingung derart eingestellt sind, dass die Anzahl der Umdrehungen des bürstenlosen Gleichstrommotors (11) mit n Magnetpolen nicht der 2 / (3 · n · m)-fachen Trägerfrequenz des PWM-Signals entspricht [wobei m eine natürliche Zahl ist].

3. Steuervorrichtung eines bürstenlosen Gleichstrommotors (11) nach Anspruch 1, wobei die Anzahl der Umdrehungen des bürstenlosen Gleichstrommotors (11) und die Trägerfrequenz von der vorbestimmten Bedingung derart eingestellt sind, dass die maximale Anzahl der Umdrehungen des bürstenlosen Gleichstrommotors (11) mit n Magnetpolen nicht größer als die 2 / (3 · n · k)-fache Trägerfrequenz des PWM-Signals ist [wobei k eine natürliche Zahl ist].

4. Steuervorrichtung eines bürstenlosen Gleichstrommotors (11) nach Anspruch 2, wobei, im Falle eines alternierenden PWM-Zerhackens der oberen und unteren Arme, die natürliche Zahl m eine ungerade Zahl ist.

5. Steuervorrichtung eines bürstenlosen Gleichstrommotors (11) nach Anspruch 2, wobei, im Falle eines PWM-Zerhackens des oberen Armes oder eines PWM-Zerhackens des unteren Armes, die natürliche Zahl m eine gerade Zahl ist.

6. Steuervorrichtung eines bürstenlosen Gleichstrommotors (11) nach Anspruch 3, wobei, im Falle eines alternierenden PWM-Zerhackens der oberen und unteren Arme, für die natürliche Zahl k gilt: k > 5.

7. Steuervorrichtung eines bürstenlosen Gleichstrommotors (11) nach Anspruch 3, wobei, im Falle eines PWM-Zerhackens des oberen Armes oder eines PWM-Zerhackens des unteren Armes, für die natürliche Zahl k gilt: k ≥5.

**Revendications**

1. Dispositif de commande d'un moteur à courant continu sans balai (11), comprenant :

un moyen de conversion courant continu/courant alternatif (12) comprenant un élément de commutation, pour convertir une tension continue en une tension alternative sur la base d'un signal PWM en ouvrant et en fermant l'élément de commutation, pour l'alimenter au moteur à courant continu sans balai (11) ayant des pôles magnétiques dont le nombre est n ;
un moyen de commande de tension (14) pour délivrer en sortie une forme d'onde de tension ;
une table de commutation de fréquence porteuse (71) précédemment définie pour la commutation d'une fréquence porteuse du signal PWM ;
un moyen de commutation de fréquence porteuse (72) pour commuter la fréquence porteuse ; et
un moyen de commande PWM (15) pour générer un signal PWM,
où la table de commutation de fréquence porteuse (71) a un contenu de table précédemment défini par une condition prédéterminée, et le signal PWM est généré par le moyen de commutation de fréquence porteuse (72) sur la base de la table de commutation de fréquence porteuse (71) ;

**caractérisé par**

un moyen de détection de force contre-électromotrice (13) pour la détection d'une force contre-électromotrice du moteur à courant continu sans balai (11) ;

où le moyen de commande de tension (14) délivre en sortie une forme d'onde de tension sur la base des informations de position polaire magnétique délivrées en sortie à partir du moyen de détection de force contre-électromotrice (13) ;

où le moyen de commande PWM (15) génère le signal PWM sur la base des sorties du moyen de détection de force contre-électromotrice (13) et du moyen de commutation de fréquence porteuse (72),

où le moyen de commutation de fréquence porteuse (72) commute la fréquence porteuse fc sur la base des informations du nombre de rotations obtenues par le moyen de détection de force contre-électromotrice (13), et le contenu de table de la table de commutation de fréquence porteuse (71) de sorte que le cas fm = 2/(3 x n x m), m étant un nombre entier naturel, ne se produise pas, et de sorte qu'une quantité de pompage lorsque le nombre de rotations du moteur à courant continu sans balai (11) ayant les n pôles magnétiques augmente ou diminue soit limitée dans une plage prédéterminée, où la quantité de pompage Δfmu lorsque le nombre de rotations augmente est exprimée comme suit

```
Δfmu = 2 / {2 / fm - 3 · n · (1-RAPPORT CYCLIQUE) /
fc} - fm
```

et la quantité de pompage Δfmu lorsque le nombre de rotations diminue est exprimée comme suit

```
Δfmd = fm - 2 / {2 / fm + 3 · n · (1-RAPPORT CYCLIQUE)
/ fc},
```

avec fm est le nombre de rotations du moteur à courant continu sans balai (11) et RAPPORT CYCLIQUE est le rapport cyclique du signal PWM.

2. Dispositif de commande d'un moteur à courant continu sans balai (11) selon la revendication 1, dans lequel le nombre de rotations du moteur à courant continu sans balai (11) et la fréquence porteuse sont définis par la condition prédéterminée, de sorte que le nombre de rotations du moteur à courant continu sans balai (11) ayant n pôles magnétiques puisse ne pas coïncider avec 2 / (3 · n · m) fois la fréquence porteuse du signal PWM [m est un nombre entier naturel].

3. Dispositif de commande d'un moteur à courant continu sans balai (11) selon la revendication 1, dans lequel le nombre de rotations du moteur à courant continu sans balai (11) et la fréquence porteuse sont définis par la condition prédéterminée, de sorte que le nombre maximal de rotations du moteur à courant continu sans balai (11) ayant n pôles magnétiques puisse ne pas dépasser 2 / (3 · n · k) fois la fréquence porteuse du signal PWM [k est un nombre entier naturel].

4. Dispositif de commande d'un moteur à courant continu sans balai (11) selon la revendication 2, dans lequel le nombre entier naturel m est un nombre impair dans le cas d'un hachage alterné PWM de branches supérieure et inférieure.

5. Dispositif de commande d'un moteur à courant continu sans balai (11) selon la revendication 2, dans lequel le nombre entier naturel m est un nombre pair dans le cas d'un hachage PWM de branche supérieure ou d'un hachage PWM de branche inférieure.

6. Dispositif de commande d'un moteur à courant continu sans balai (11) selon la revendication 3, dans lequel le nombre entier naturel k est tel que k > 5 dans le cas d'un hachage alterné PWM de branches supérieure et inférieure.

7. Dispositif de commande d'un moteur à courant continu sans balai (11) selon la revendication 3, dans lequel le nombre entier naturel k est tel que k ≥ 5 dans le cas d'un hachage PWM de branche supérieure ou d'un hachage PWM de branche inférieure.

## Fig. 1

# Fig. 2

Carrier signal — 26

Indicating voltage — 25

Upper arm PWM signal — 23

Lower arm PWM signal

$\dfrac{VDC}{2}$ — 24

Time

Phase angle $\phi$

Blank period — 28

27

First electric angle 60° section — 21

Next electric angle 60° section — 22

*Fig. 3*

## Fig. 4

Fig. 5

# Fig. 6

*Fig. 7*

DC/AC converting means — 12

11

Back emf detecting means — 13

Voltage controlling means — 14

Carrier frequency switching means — 72

Carrier frequency switching table — 71

PWM controling means — 15

16

# Fig. 8

Fig. 9

**Fig. 10**

**EP 1 482 632 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002101684 A
- JP 2002186787 A
- JP 2000083396 B